# EUROPÄISCHE PATENTSCHRIFT

(11) **EP 3 704 727 B1**
(45) Veröffentlichungstag und Bekanntmachung des Hinweises auf die Patenterteilung: **03.01.2024**
(21) Anmeldenummer: 18815533.7
(22) Anmeldetag: 22.11.2018
(51) Int. Cl.: H01H 3/30, F16D 41/18, H01H 33/40, F16D 7/04, F16H 33/06

(54) **SPANNGETRIEBE ZUM SPANNEN EINER SPEICHERFEDER EINES FEDERSPEICHERANTRIEBS**
CHARGING MECHANISM FOR CHARGING A STORED-ENERGY SPRING OF A STORED-ENERGY SPRING MECHANISM
MÉCANISME DE TENSION POUR TENDRE UN RESSORT ACCUMULATEUR D'UN MÉCANISME D'ENTRAÎNEMENT À ACCUMULATEUR À RESSORT

(30) Priorität: 20.12.2017 DE 102017223357
(43) Veröffentlichungstag der Anmeldung: 09.09.2020
(73) Patentinhaber: Siemens Energy Global GmbH & Co. KG, 81739 München (DE)
(72) Erfinder: BINNER, Lukas, 13088 Berlin (DE); LÖBNER, Friedrich, 10245 Berlin (DE)
(86) Internationale Anmeldenummer: PCT/EP2018/082189
(87) Internationale Veröffentlichungsnummer: WO 2019/120853

(56) Entgegenhaltungen:
- EP-A1- 2 940 705
- CN-U- 201 956 270
- DE-A1-102014 224 405
- US-A1- 2016 240 330
- Haberhauer Horst ET AL: "Maschinenelemente - Gestaltung, Berechnung, Anwendung" In: "Maschinenelemente - Gestaltung, Berechnung, Anwendung", 31 December 2007 (2007-12-31), Springer Verlag, Berlin, Heidelberg, New York, XP055817334, ISBN: 978-3-540-41262-5 pages 1-650, * page 397, paragraph 4.4.4.1 - page 398; figures 4.112-4.114 *

## Beschreibung

Die Erfindung betrifft ein Spanngetriebe zum Spannen einer Speicherfeder eines Federspeicherantriebs, insbesondere für einen Leistungsschalter.

Federspeicherantriebe werden insbesondere als Antriebe zum Schalten von Leistungsschaltern verwendet. Leistungsschalter sind elektrische Schalter, die für hohe elektrische Ströme und Spannungen ausgelegt sind, um insbesondere hohe Überlastströme und Kurzschlussströme sicher abschalten zu können. Dazu weisen Leistungsschalter eine Unterbrechereinheit mit wenigstens einem bewegbaren Schaltelement zum Öffnen und Schließen eines Strompfads auf. Zum Bewegen der Schaltelemente bei einem Schaltvorgang halten Leistungsschalter eine für den Schaltvorgang benötigte Energie bereit. Federspeicherantriebe speichern diese Energie in Speicherfedern, die zur Speicherung der Energie gespannt werden. Eine Speicherfeder wird beispielsweise mit einem Spannmotor gespannt, der über ein Spanngetriebe mit der Speicherfeder verbunden ist. Analog werden Federspeicherantriebe auch beispielsweise als Antriebe zum Schalten von Lasttrennschaltern verwendet.

US 2016/0240330 A1 offenbart einen Kupplungsmechanismus für eine Energiespeichervorrichtung. Der Kupplungsmechanismus umfasst ein Lastzahnrad, ein Antriebszahnrad, ein Freilauflager, mehrere Zylinder, eine Lagerschale und eine Getriebewelle. In einem Hohlraum der Getriebewelle sind eine Schubstange, eine Drehhülse und ein elastisches Element angeordnet. Die Schubstange umfasst ein Schubstangenschiebeloch und ein Schubstangenverbindungsloch zum Verbinden mit der Getriebewelle beziehungsweise mit der Drehhülse. Am Antriebszahnrad ist ein Pressblock befestigt, durch den die Schubstange in axialer Richtung verschiebbar ist, um die Lagerschale und die Getriebewelle miteinander zu koppeln oder voneinander zu entkoppeln. Ferner ist ein gasisolierter Leistungsschalter offenbart, der einen solchen Kupplungsmechanismus umfasst. Ein weiterer Kupplungsmechanismus ist z. B. aus der CN 201 956 270 U bekannt.

Der Erfindung liegt die Aufgabe zugrunde, ein verbessertes Spanngetriebe zum Spannen einer Speicherfeder eines Federspeicherantriebs anzugeben.

Die Aufgabe wird erfindungsgemäß durch die Merkmale des Anspruchs 1 gelöst.

Vorteilhafte Ausgestaltungen der Erfindung sind Gegenstand der abhängigen Ansprüche.

Ein erfindungsgemäßes Spanngetriebe zum Spannen einer Speicherfeder eines Federspeicherantriebs umfasst ein an die Speicherfeder gekoppeltes Spannrad, eine an das Spannrad gekoppelte Zwischenwelle, ein von einem Spannmotor antreibbares Zwischenrad, einen an das Zwischenrad gekoppelten Freilauf und eine Klauenkupplung, die den Freilauf zum Spannen der Speicherfeder an die Zwischenwelle koppelt und in dem gespannten Zustand der Speicherfeder von der Zwischenwelle entkoppelt. Die Klauenkupplung weist eine drehfest an die Zwischenwelle gekoppelte erste Kupplungsbacke und eine mit dem Freilauf verbundene zweite Kupplungsbacke auf. Die erste Kupplungsbacke ist zwischen zwei Endstellungen entlang einer Drehachse der Zwischenwelle verschiebbar und weist mehrere der zweiten Kupplungsbacke zugewandte erste Klauen auf, die um die Zwischenwelle herum angeordnet sind. Die zweite Kupplungsbacke weist mehrere der ersten Kupplungsbacke zugewandte zweite Klauen auf. Jede zweite Klaue ragt in einer zwischen den beiden Endstellungen liegenden Zwischenstellung der ersten Kupplungsbacke in einen Zwischenraum zwischen zwei ihr benachbarten ersten Klauen hinein und weist für eine dieser beiden ersten Klauen eine Anschlagsfläche auf, an der eine Seitenfläche dieser ersten Klaue bei einer Drehung der ersten Kupplungsbacke gegenüber der zweiten Kupplungsbacke in einer ersten Drehrichtung um die Drehachse anschlägt. Für die andere der beiden ihr benachbarten ersten Klauen bildet die zweite Klaue eine Rampe, auf der diese erste Klaue bei einer Drehung der ersten Kupplungsbacke gegenüber der zweiten Kupplungsbacke in einer der ersten Drehrichtung entgegengesetzten zweiten Drehrichtung um die Drehachse gleiten kann.

Die Zwischenwelle überträgt beim Spannen der Speicherfeder Drehungen des Zwischenrads über den Freilauf und die Klauenkupplung auf das Spannrad und ermöglicht dadurch das Spannen der Speicherfeder durch den Spannmotor, der direkt oder indirekt das Zwischenrad antreibt. Die Klauenkupplung entkoppelt in dem gespannten Zustand der Speicherfeder die Zwischenwelle von dem Freilauf und dem Zwischenrad, so dass durch das Zwischenrad, insbesondere bei einem Nachlaufen des Spannmotors nach dem Spannen der Speicherfeder, keine Kräfte auf die Zwischenwelle und das Spannrad übertragen werden. Ohne die Klauenkupplung würden diese Kräfte in dem gespannten Zustand der Speicherfeder auf die Zwischenwelle und an die Zwischenwelle gekoppelte Komponenten des Spanngetriebes übertragen werden und diese verspannen und belasten. Die Klauenkupplung entlastet daher vorteilhaft die Zwischenwelle und an sie gekoppelte Komponenten des Spanngetriebes in dem gespannten Zustand der Speicherfeder.

Durch die drehfeste Kopplung der ersten Kupplungsbacke an die Zwischenwelle werden Drehungen der Zwischenwelle auf die erste Kupplungsbacke übertragen. Die Verschiebbarkeit der ersten Kupplungsbacke ermöglicht deren Kopplung an die zweite Kupplungsbacke und den mit dieser verbundenen Freilauf zum Spannen der Speicherfeder und die Entkopplung der Kupplungsbacken im gespannten Zustand der Speicherfeder.

Die Klauenkupplung ermöglicht ein Synchronisieren von Drehungen der beiden Kupplungsbacken, bevor die Klauenkupplung schließt, da die ersten Klauen bei Drehungen der ersten Kupplungsbacke gegenüber der zweiten Kupplungsbacke in einer ersten Drehrichtung bereits in der Zwischenstellung der ersten Kupplungsbacke jeweils an einer zweiten Klaue anschlagen, so dass die zweite Kupplungsbacke von der ersten Kupplungsbacke bei Drehungen in der ersten Drehrichtung mitbewegt wird. Wenn die Klauenkupplung schließt, sind die Drehungen der beiden Kupplungsbacken daher bereits synchronisiert. Ferner schlagen die ersten Klauen dabei jeweils immer flächig an einer zweiten Klaue an, nämlich mit einer Seitenfläche an einer Anschlagsfläche der zweiten Klaue. Dadurch wird vorteilhaft verhindert, dass eine Kante einer Klaue mit einer anderen Klaue kollidiert, was zu einem Verschleiß der Klauen führen würde.

Andererseits ermöglicht die Klauenkupplung in der Zwischenstellung der ersten Kupplungsbacke, das heißt im geöffneten Zustand der Klauenkupplung, Drehungen der ersten Kupplungsbacke gegenüber der zweiten Kupplungsbacke in einer der ersten Drehrichtung entgegengesetzten zweiten Drehrichtung, da die zweiten Klauen bei diesen Drehungen Rampen für die ersten Klauen bilden, über welche die ersten Klauen laufen können. Dadurch werden insbesondere Drehungen der zweiten Kupplungsbacke ermöglicht, die durch ein Nachlaufen des Spannmotors verursacht werden, wenn nach dem Spannen der Speicherfeder das Spannrad und die Zwischenwelle fest stehen und sich daher die erste Kupplungsbacke nicht drehen kann.

Eine Ausgestaltung der Erfindung sieht vor, dass die ersten Klauen zueinander äquidistant und in gleichem Abstand von der Drehachse angeordnet sind, und dass die zweiten Klauen zueinander äquidistant und in demselben Abstand von der Drehachse wie die ersten Klauen angeordnet sind. Dadurch können die ersten Klauen bei Drehungen in der ersten Drehrichtung gleichzeitig an jeweils einer zweiten Klaue anschlagen und bei Drehungen in der zweiten Drehrichtung gleichzeitig über jeweils eine zweite Klaue laufen.

Eine weitere Ausgestaltung der Erfindung sieht vor, dass die erste Kupplungsbacke vier erste Klauen aufweist und die zweite Kupplungsbacke vier zweite Klauen aufweist. Vier Klauen je Kupplungsbacke haben sich als ein vorteilhafter Kompromiss zwischen einer Belastung der Klauen und einem zum Schließen der Klauenkupplung benötigten Abstand der Klauen jeder Kupplungsbacke erwiesen. Einerseits steigt nämlich die Belastung der einzelnen Klauen mit abnehmender Anzahl der Klauen. Andererseits wird zum Schließen der Klauenkupplung ein ausreichender Abstand von den Klauen jeder Kupplungsbacke benötigt, da sich die Kupplungsbacken schnell relativ zueinander drehen können.

Die Erfindung sieht ein mit der ersten Kupplungsbacke verbundenes Koppelelement vor, das durch eine senkrecht zu der Drehachse der Zwischenwelle verlaufende Queröffnung in der Zwischenwelle geführt ist und in der Queröffnung zwischen einer eine erste Endstellung der ersten Kupplungsbacke definierenden ersten Position und einer die zweite Endstellung der ersten Kupplungsbacke definierenden zweiten Position parallel zu der Drehachse der Zwischenwelle verschiebbar ist. Das Koppelelement ist beispielsweise als ein Rohr oder Bolzen ausgebildet, dessen Längsachse senkrecht zur Drehachse der Zwischenwelle angeordnet ist und dessen Enden in Ausnehmungen in der ersten Kupplungsbacke hineinragen. Das Koppelelement ermöglicht ein Verschieben der ersten Kupplungsbacke durch ein Verschieben des Koppelelements.

Ferner ist beispielsweise ein Schaltstift vorgesehen, der in einer entlang der Drehachse der Zwischenwelle verlaufenden Längsöffnung in der Zwischenwelle verschiebbar gelagert und an das Koppelelement gekoppelt ist. Dadurch kann die erste Kupplungsbacke über das Koppelement durch Verschieben des Schaltstifts zwischen ihren Endstellungen verschoben werden.

Ferner ist beispielsweise vorgesehen, dass ein Absteuerende des Schaltstiftes aus der Längsöffnung in der Zwischenwelle herausragt und an dem Spannrad ein Absteuerelement angeordnet ist, das das Absteuerende des Schaltstifts im gespannten Zustand der Speicherfeder zu der Längsöffnung hin verschiebt, so dass das Koppelelement von seiner ersten in seine zweite Position verschoben wird. Beispielsweise weist das Absteuerelement ein radial von dem Spannrad abstehendes Kontaktende mit einer Kontaktfläche auf, die beim Verschieben des Schaltstifts an dessen Absteuerende anliegt. Durch das Absteuerelement wird das Spannrad in einer Stellung, in der die Speicherfeder gespannt ist, an den Schaltstift gekoppelt, wobei das Absteuerelement den Schaltstift verschiebt und dadurch die Klauenkupplung öffnet.

Vorzugsweise verläuft jede der beiden Kupplungsbacken ringförmig um die Zwischenwelle herum. Dadurch wird in einfacher Weise eine zuverlässige Kopplung der Klauenkupplung an die Zwischenwelle und den Freilauf ermöglicht.

Ferner ist beispielsweise eine an die erste Kupplungsbacke gekoppelte Rückstellfeder vorgesehen, die auf die erste Kupplungsbacke eine Federkraft in Richtung der zweiten Kupplungsbacke ausübt. Durch die Rückstellfeder kann die erste Kupplungsbacke zu der zweiten Kupplungsbacke geschoben werden, wenn das Absteuerelement beim Entspannen der Speicherfeder den Schaltstift freigibt. Dadurch wird die Klauenkupplung wieder geschlossen und das Spanngetriebe ist nach dem Entspannen der Speicherfeder zum erneuten Spannen der Speicherfeder bereit.

Der Freilauf weist beispielsweise einen um die Zwischenwelle herum verlaufenden Freilaufinnenring auf, mit dem die zweite Kupplungsbacke verbunden ist. Dadurch wird eine zuverlässige Kopplung der Klauenkupplung an den Freilauf ermöglicht.

Das Zwischenrad ist beispielsweise über ein Kegelradgetriebe durch den Spannmotor antreibbar. Dadurch wird eine Umlenkung der Antriebskraft des Spannmotors erreicht, die eine kompakte Bauform des Federspeicherantriebs ermöglicht.

Ferner weist das Spanngetriebe vorzugsweise einen Arretierungsmechanismus zum lösbaren Arretieren des Spannrads in einem gespannten Zustand der Speicherfeder auf. Der Arretierungsmechanismus weist beispielsweise eine fest mit dem Spannrad verbundene Kurvenscheibenrolle und eine Einklinke, die die Kurvenscheibenrolle zum Arretieren des Spannrads fixiert, auf. Durch einen derartigen Arretierungsmechanismus ist das Spannrad in dem gespannten Zustand der Speicherfeder arretierbar, so dass die Speicherfeder gespannt bleibt bis die Arretierung zur Freigabe der von der Speicherfeder gespeicherten Energie gelöst wird.

Ein erfindungsgemäßer Federspeicherantrieb weist ein erfindungsgemäßes Spanngetriebe auf. Die Vorteile eines derartigen Federspeicherantriebs ergeben sich aus den oben genannten Vorteilen eines erfindungsgemäßen Spanngetriebes.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine perspektivische und teilweise geschnittene Darstellung eines Spanngetriebes, und
- FIG 2: einen vergrößerten Ausschnitt der Figur 1,
- FIG 3: eine perspektivische Darstellung einer Zwischenwelle, eines Zwischenrades und einer geöffneten Klauenkupplung,
- FIG 4: eine perspektivische Darstellung einer Zwischenwelle, eines Zwischenrades und einer geschlossenen Klauenkupplung.

Einander entsprechende Teile sind in den Figuren mit denselben Bezugszeichen versehen.

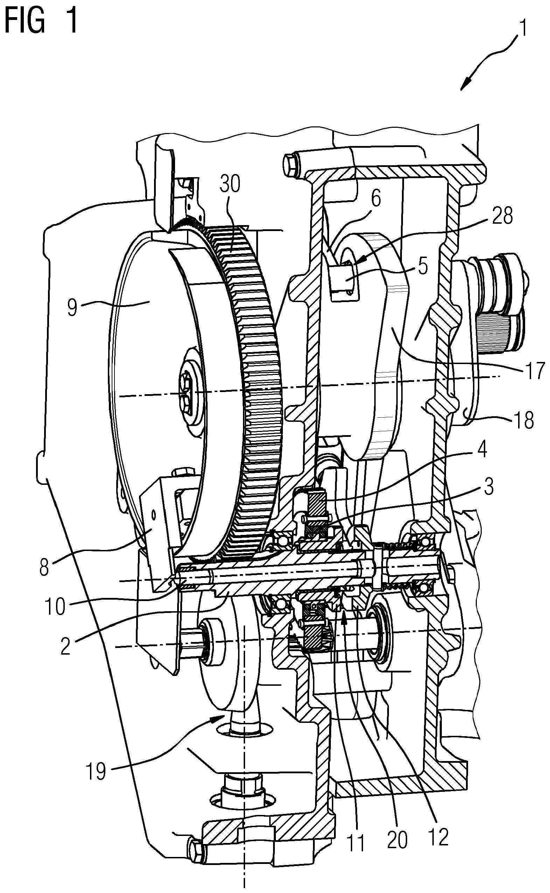

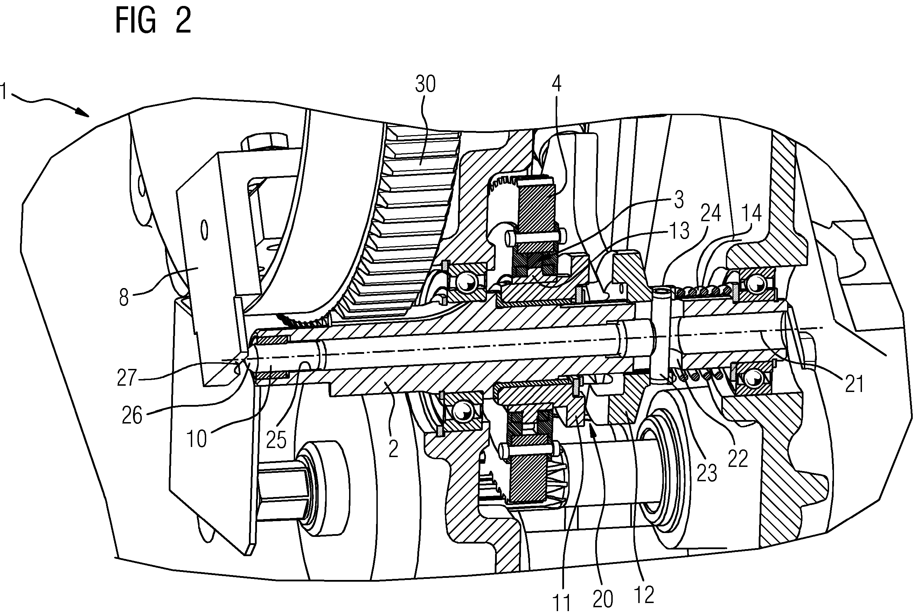

Die Figuren 1 und 2 zeigen ein Spanngetriebe 1 zum Spannen einer (nicht dargestellten) Speicherfeder eines Federspeicherantriebs in einer perspektivischen und teilweise geschnittenen Darstellung, wobei Figur 2 einen vergrößerten Ausschnitt der Figur 1 zeigt. Die Speicherfeder ist beispielsweise eine Einschaltfeder des Federspeicherantriebs, die Energie zum Schließen eines Strompfads eines Leistungsschalters speichert. Das Spanngetriebe 1 umfasst unter anderem ein Spannrad 9, eine Zwischenwelle 2 und ein Zwischenrad 4.

Das Spannrad 9 ist fest mit einer Kurvenscheibe 17 und einer Spannwelle 18 verbunden und über die Spannwelle 18 an die Speicherfeder gekoppelt.

Das Zwischenrad 4 ist über ein Kegelradgetriebe 19 von einem (nicht dargestellten) Spannmotor antreibbar.

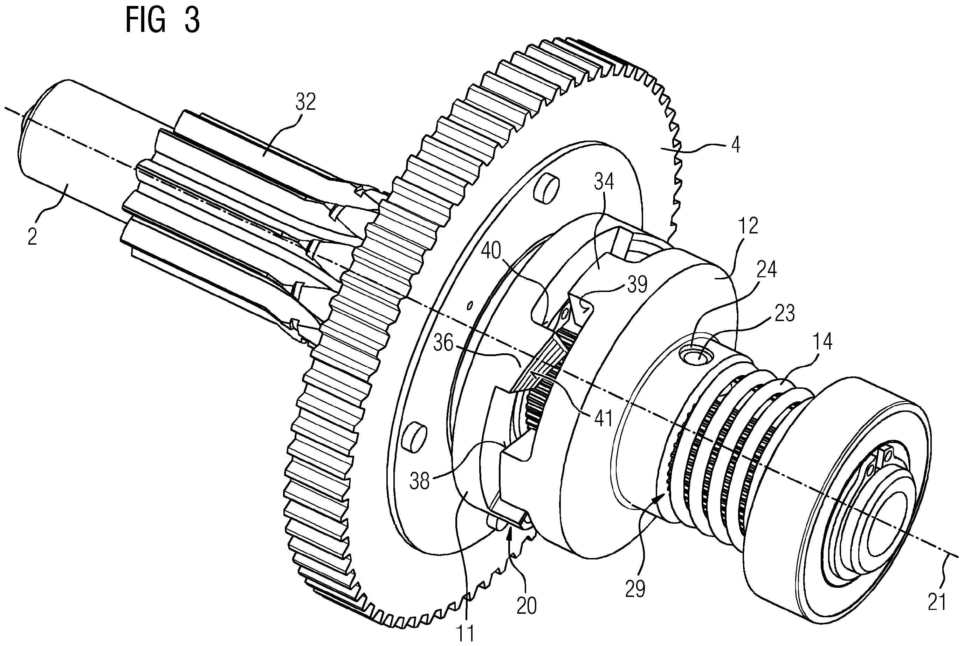

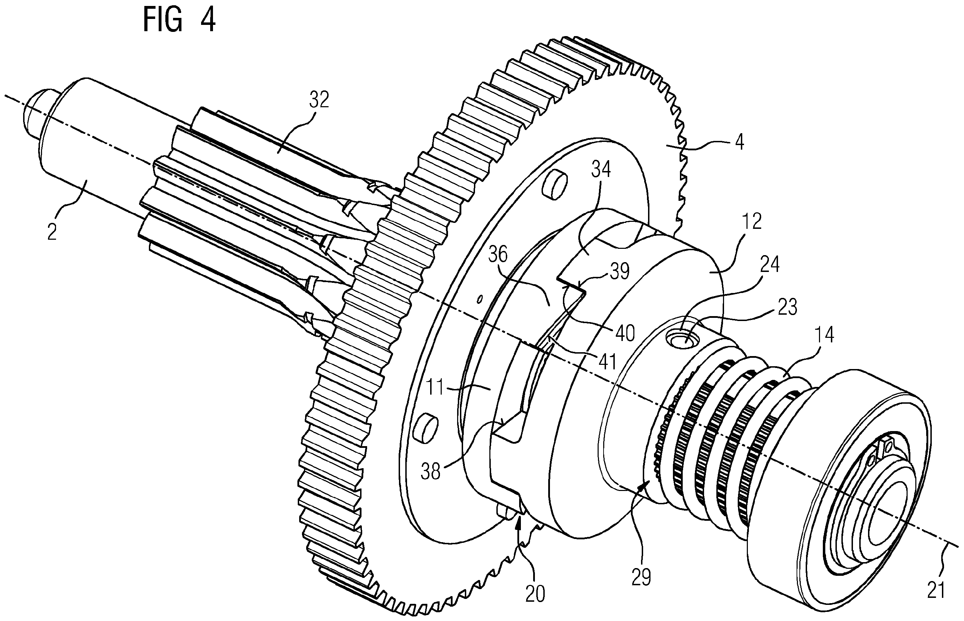

Die Zwischenwelle 2 ist an das Spannrad 9 und das Zwischenrad 4 gekoppelt, um zum Spannen der Speicherfeder Drehungen des Zwischenrads 4 auf das Spannrad 9 zu übertragen. Die Kopplung zwischen der Zwischenwelle 2 und dem Spannrad 9 ist eine Zahnradkopplung, die von einem Zahnkranz 30 des Spannrads 9 und einem dazu korrespondierenden Zahnradring 32 (siehe die Figuren 3 und 4) der Zwischenwelle 2 gebildet wird.

Das Zwischenrad 4 ist über einen Freilauf 3 und eine Klauenkupplung 20 an die Zwischenwelle 2 gekoppelt, wobei der Freilauf 3 das Zwischenrad 4 mit der Klauenkupplung 20 verbindet. Die Klauenkupplung 20 weist eine drehfest an die Zwischenwelle 2 gekoppelte erste Kupplungsbacke 12 und eine mit einem Freilaufinnenring 13 des Freilaufs 3 verbundene zweite Kupplungsbacke 11 auf. Beide Kupplungsbacken 11, 12 verlaufen ringförmig um die Zwischenwelle 2.

Die erste Kupplungsbacke 12 ist zwischen zwei Endstellungen axial, das heißt parallel zu einer Drehachse 21 der Zwischenwelle 2, verschiebbar. In einer ersten Endstellung der ersten Kupplungsbacke 12 ist die Klauenkupplung 20 geschlossen und koppelt den Freilauf 3 und das Zwischenrad 4 zum Spannen der Speicherfeder an die Zwischenwelle 2 (siehe Figur 4). Von der ersten Endstellung zu der zweiten Endstellung wird die erste Kupplungsbacke 12 von der zweiten Kupplungsbacke 11 weg verschoben.

Der Freilauf 3 entkoppelt das Zwischenrad 4 von der Zwischenwelle 2 beim Spannen der Speicherfeder, wenn die Spannwelle 18 über einen oberen Totpunkt läuft.

Um die erste Kupplungsbacke 12 drehfest und axial verschiebbar an die Zwischenwelle 2 zu koppeln, weisen die erste Kupplungsbacke 12 und die Zwischenwelle 2 eine Verzahnung 29 auf (siehe die Figuren 3 und 4).

Um die erste Kupplungsbacke 12 von ihrer ersten Endstellung in die zweite Endstellung zu verschieben, weist die Zwischenwelle 2 im Bereich der ersten Kupplungsbacke 12 eine langlochartige Queröffnung 22 auf, die senkrecht zu der Drehachse 21 durch die Zwischenwelle 2 verläuft. Durch die Queröffnung 22 ist ein mit der ersten Kupplungsbacke 12 verbundenes Koppelement 23 geführt, das in der Queröffnung 22 zwischen einer die erste Endstellung der ersten Kupplungsbacke 12 definierenden ersten Position und einer die zweite Endstellung der ersten Kupplungsbacke 12 definierenden zweiten Position verschiebbar ist. In dem in den Figuren dargestellten Ausführungsbeispiel ist das Koppelement 23 als ein Rohr ausgebildet, dessen Enden in Ausnehmungen 24 in der ersten Kupplungsbacke 12 hineinragen. Alternativ kann das Koppelement 23 aber auch beispielsweise als ein Bolzen ausgeführt sein.

Ferner weist die Zwischenwelle 2 eine entlang ihrer Drehachse 21 verlaufende Längsöffnung 25 auf, die sich von der Queröffnung 22 zu einem spannradseitigen Ende der Zwischenwelle 2 erstreckt. In der Längsöffnung 25 ist ein Schaltstift 10 axial verschiebbar gelagert, der ein aus der Längsöffnung 25 heraus ragendes Absteuerende 26 aufweist und sich in der Längsöffnung 25 bis zu dem Koppelement 23 erstreckt.

An dem Spannrad 9 ist ein Absteuerelement 8 angeordnet, das das Absteuerende 26 des Schaltstifts 10 im gespannten Zustand der Speicherfeder zu der Längsöffnung 25 hin verschiebt. Das Absteuerelement 8 weist ein radial von dem Spannrad 9 abstehendes Kontaktende mit einer Kontaktfläche 27 auf, die beim Verschieben des Schaltstifts 10 an dessen Absteuerende 26 anliegt. Das Absteuerelement 8 ist beispielsweise an einer Position an dem Spannrad 9 angeordnet, in der die Kontaktfläche 27 das Absteuerende 26 des Schaltstifts 10 kontaktiert, wenn sich das Spannrad 9 etwa drei Grad weitergedreht hat, nachdem die Spannwelle 18 den oberen Totpunkt erreicht hat.

An die erste Kupplungsbacke 12 ist ferner eine Rückstellfeder 14 gekoppelt, die helixartig um die Zwischenwelle 2 herum verläuft. Die Rückstellfeder 14 greift an einem von der zweiten Kupplungsbacke 11 abgewandten Ende der ersten Kupplungsbacke 12 an und übt auf die erste Kupplungsbacke 12 eine Federkraft in Richtung der zweiten Kupplungsbacke 11 aus.

Das Spanngetriebe 1 weist außerdem einen Arretierungsmechanismus 28 zum lösbaren Arretieren des Spannrads 9 in dem gespannten Zustand der Speicherfeder auf. Der Arretierungsmechanismus 28 des in den Figuren gezeigten Ausführungsbeispiels weist eine an der Kurvenscheibe 17 angeordnete Kurvenscheibenrolle 5 und eine Einklinke 6, die die Kurvenscheibenrolle 5 zum Arretieren des Spannrads 9 fixiert, auf. Nach dem Trennen der Kupplungsbacken 11, 12 läuft die Kurvenscheibenrolle 5 gegen die Einklinke 6 und wird von der Einklinke 6 in dieser Position arretiert, beispielsweise wenn sich das Spannrad 9 etwa zehn Grad weitergedreht hat, nachdem die Spannwelle 18 den oberen Totpunkt erreicht hat. Dadurch wird ein Abprallen der Kurvenscheibenrolle 5 von der Einklinke 6 durch die geöffnete Klauenkupplung 20 ermöglicht und damit eine Verspannung des Freilaufs 3 verhindert.

Im gespannten Zustand der Speicherfeder werden die Zwischenwelle 2 und an sie gekoppelte Komponenten wie die Einklinke 6 und die Kurvenscheibenrolle 5 durch die Klauenkupplung 20 in unten näher beschriebener Weise von dem Zwischenrad 4 entkoppelt, um nicht durch das Zwischenrad 4, beispielsweise bei einem Nachlaufen des Spannmotors, belastet und verspannt zu werden. Dadurch werden vorteilhaft insbesondere die Belastung der Einklinke 6, der Kurvenscheibenrolle 5 und des Freilaufs 3 reduziert und eine Abnutzung oder Schädigung dieser Komponenten des Spanngetriebes 1 durch diese Belastung verhindert.

Zur Freigabe der in der gespannten Speicherfeder gespeicherten Energie wird die Kopplung der Einklinke 6 an die Kurvenscheibenrolle 5 gelöst. Die sich entspannende Speicherfeder dreht das Spannrad 9 in derselben Drehrichtung wie beim Spannen der Speicherfeder, wodurch das Absteuerelement 8 den Schaltstift 10 wieder freigibt und die erste Kupplungsbacke 12 durch die Rückstellfeder 14 zu der zweiten Kupplungsbacke 11 geschoben wird, so dass die Klauenkupplung 20 wieder geschlossen wird. Dadurch ist das Spanngetriebe 1 zum erneuten Spannen der Speicherfeder bereit.

Die Figuren 3 und 4 zeigen perspektivische Darstellungen der Zwischenwelle 2, des Zwischenrades 4 und der Klauenkupplung 20. Dabei zeigt Figur 3 die erste Kupplungsbacke 12 in einer zwischen ihren beiden Endstellungen liegenden Zwischenstellung, in der die Klauenkupplung 20 geöffnet ist, und Figur 4 zeigt die erste Kupplungsbacke 12 in der ersten Endstellung, in der die Klauenkupplung 20 geschlossen ist.

Die erste Kupplungsbacke 12 weist vier der zweiten Kupplungsbacke 11 zugewandte erste Klauen 34 auf, die zueinander äquidistant und in gleichem Abstand von der Drehachse 21 um die Zwischenwelle 2 herum angeordnet sind. In der in Figur 4 gezeigten ersten Endstellung der ersten Kupplungsbacke 12 liegen die ersten Klauen 34 jeweils mit einer der zweiten Kupplungsbacke 11 zuwandten Frontfläche 38, die senkrecht zur Drehachse 21 ist, an der zweiten Kupplungsbacke 11 an.

Die zweite Kupplungsbacke 11 weist vier der ersten Kupplungsbacke 12 zugewandte zweite Klauen 36 auf, die ebenfalls zueinander äquidistant und in demselben Abstand von der Drehachse 21 wie die ersten Klauen 34 um die Zwischenwelle 2 herum angeordnet sind.

Jede zweite Klaue 36 ragt in der in Figur 3 gezeigten Zwischenstellung der ersten Kupplungsbacke 12 in einen Zwischenraum zwischen zwei ihr benachbarten ersten Klauen 34 hinein und weist für eine dieser beiden ersten Klauen 34 eine Anschlagsfläche 40 auf, an der eine Seitenfläche 39 dieser ersten Klaue 34 bei einer Drehung der ersten Kupplungsbacke 12 gegenüber der zweiten Kupplungsbacke 11 in einer ersten Drehrichtung um die Drehachse 21 anschlägt. Dadurch verhindern die zweiten Klauen 34 eine weitere Drehung der ersten Kupplungsbacke 12 gegenüber der zweiten Kupplungsbacke 11 in der ersten Drehrichtung, nachdem die ersten Klauen 34 jeweils an einer zweiten Klaue 36 angeschlagen sind. Auf diese Weise werden Drehungen der beiden zweiten Kupplungsbacken 11, 12 in der ersten Drehrichtung bereits synchronisiert, bevor die erste Kupplungsbacke 12 ihre erste Endstellung erreicht. Außerdem schlagen die ersten Klauen 34 jeweils immer seitlich und flächig an einer zweiten Klaue 36 an, so dass dabei keine Kante einer Klaue 34, 36 mit einer anderen Klaue 34, 36 kollidiert, was zu einem Verschleiß der Klauen 34, 36 führen würde.

Ferner bildet jede zweite Klaue 36 für die andere der beiden ihr benachbarten ersten Klauen 34 eine Rampe, auf der diese erste Klaue 34 bei einer Drehung der ersten Kupplungsbacke 12 gegenüber der zweiten Kupplungsbacke 11 in einer der ersten Drehrichtung entgegengesetzten zweiten Drehrichtung um die Drehachse 21 gleiten kann. Die Rampe wird von einer der ersten Kupplungsbacke 12 zugewandten Schrägfläche 41 gebildet, die gegenüber den Frontflächen 38 der ersten Klauen 34 geneigt ist und in der zweiten Drehrichtung zu der ersten Kupplungsbacke 12 hin ansteigt. Dadurch wird eine Drehung der ersten Kupplungsbacke 12 gegenüber der zweiten Kupplungsbacke 11 in der zweiten Drehrichtung ermöglicht, bei der alle ersten Klauen 34 gleichzeitig jeweils über eine Schrägfläche 41 laufen können, wobei die erste Kupplungsbacke 12 gegen die Federkraft der Rückstellfeder 14 in Richtung der zweiten Endstellung verschoben wird. Nachdem die ersten Klauen 34 jeweils eine Schrägfläche 40 passiert haben, wird die erste Kupplungsbacke 12 durch die Federkraft der Rückstellfeder 14 wieder in Richtung der zweiten Kupplungsbacke 11 gedrückt. Dadurch wird insbesondere eine Drehung der zweiten Kupplungsbacke 11 ermöglicht, die durch ein Nachlaufen des Spannmotors verursacht wird, wenn das Spannrad 9 nach dem Spannen der Speicherfeder durch den Arretierungsmechanismus 28 arretiert ist und daher auch die erste Kupplungsbacke 12 fest steht. Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den in den Ansprüchen definierten Schutzumfang der Erfindung zu verlassen.

## Patentansprüche

1. Spanngetriebe (1) zum Spannen einer Speicherfeder eines Federspeicherantriebs, das Spanngetriebe (1) umfassend
- ein an die Speicherfeder gekoppeltes Spannrad (9),
- eine an das Spannrad (9) gekoppelte Zwischenwelle (2),
- ein von einem Spannmotor antreibbares Zwischenrad (4) und
- einen an das Zwischenrad (4) gekoppelten Freilauf (3), **gekennzeichnet durch**
- eine Klauenkupplung (20), die den Freilauf (3) zum Spannen der Speicherfeder an die Zwischenwelle (2) koppelt, in dem gespannten Zustand der Speicherfeder von der Zwischenwelle (2) entkoppelt und eine drehfest an die Zwischenwelle (2) gekoppelte erste Kupplungsbacke (12) und eine mit dem Freilauf (3) verbundene zweite Kupplungsbacke (11) aufweist,
- wobei die erste Kupplungsbacke (12) zwischen zwei Endstellungen entlang einer Drehachse (21) der Zwischenwelle (2) verschiebbar ist und mehrere der zweiten Kupplungsbacke (11) zugewandte erste Klauen (34) aufweist, die um die Zwischenwelle (2) herum angeordnet sind,
- die zweite Kupplungsbacke (11) mehrere der ersten Kupplungsbacke (12) zugewandte zweite Klauen (36) aufweist
- und jede zweite Klaue (36) in einer zwischen den beiden Endstellungen liegenden Zwischenstellung der ersten Kupplungsbacke (12) in einen Zwischenraum zwischen zwei ihr benachbarten ersten Klauen (34) hineinragt, für eine dieser beiden ihr benachbarten ersten Klauen (34) eine Anschlagsfläche (40) aufweist, an der eine Seitenfläche (39) dieser ersten Klaue (34) bei einer Drehung der ersten Kupplungsbacke (12) gegenüber der zweiten Kupplungsbacke (11) in einer ersten Drehrichtung um die Drehachse (21) anschlägt, und für die andere der beiden ihr benachbarten ersten Klauen (34) eine Rampe bildet, auf der diese erste Klaue (34) bei einer Drehung der ersten Kupplungsbacke (12) gegenüber der zweiten Kupplungsbacke (11) in einer der ersten Drehrichtung entgegengesetzten zweiten Drehrichtung um die Drehachse (21) gleiten kann,
- ein mit der ersten Kupplungsbacke (12) verbundenes Koppelelement (23), das durch eine senkrecht zu der Drehachse (21) der Zwischenwelle (2) verlaufende Queröffnung (22) in der Zwischenwelle (2) geführt ist und in der Queröffnung (22) zwischen einer eine erste Endstellung der ersten Kupplungsbacke (12) definierenden ersten Position und einer die zweite Endstellung der ersten Kupplungsbacke (12) definierenden zweiten Position parallel zu der Drehachse (21) der Zwischenwelle (2) verschiebbar ist.

2. Spanngetriebe (1) nach Anspruch 1,
**dadurch gekennzeichnet, dass** die ersten Klauen (34) zueinander äquidistant und in gleichem Abstand von der Drehachse (21) angeordnet sind, und dass die zweiten Klauen (36) zueinander äquidistant und in demselben Abstand von der Drehachse (21) wie die ersten Klauen (34) angeordnet sind.

3. Spanngetriebe (1) nach Anspruch 1 oder 2,
**dadurch gekennzeichnet, dass** die erste Kupplungsbacke (12) vier erste Klauen (34) aufweist und die zweite Kupplungsbacke (11) vier zweite Klauen (36) aufweist.

4. Spanngetriebe (1) nach einem der vorhergehenden Ansprüche, **dadurch gekennzeichnet, dass** das Koppelelement (23) als ein Rohr oder Bolzen ausgebildet ist, dessen Längsachse senkrecht zur Drehachse (21) der Zwischenwelle (2) angeordnet ist und dessen Enden in Ausnehmungen (24) in der ersten Kupplungsbacke (12) hineinragen.

5. Spanngetriebe (1) nach einem der vorhergehenden Ansprüche, **gekennzeichnet durch** einen Schaltstift (10), der in einer entlang der Drehachse (21) der Zwischenwelle (2) verlaufenden Längsöffnung (25) in der Zwischenwelle (2) verschiebbar gelagert und an das Koppelelement (23) gekoppelt ist.

6. Spanngetriebe (1) nach Anspruch 5,
**dadurch gekennzeichnet, dass** ein Absteuerende (26) des Schaltstifts (10) aus der Längsöffnung (25) heraus ragt und an dem Spannrad (9) ein Absteuerelement (8) angeordnet ist, das das Absteuerende (26) des Schaltstifts (10) im gespannten Zustand der Speicherfeder zu der Längsöffnung (25) hin verschiebt, so dass das Koppelelement (23) von seiner ersten in seine zweite Position verschoben wird.

7. Spanngetriebe (1) nach Anspruch 6,
**dadurch gekennzeichnet, dass** das Absteuerelement (8) ein radial von dem Spannrad (9) abstehendes Kontaktende mit einer Kontaktfläche (27) aufweist, die beim Verschieben des Schaltstifts (10) an dessen Absteuerende (26) anliegt.

8. Spanngetriebe (1) nach einem der vorhergehenden Ansprüche, **dadurch gekennzeichnet, dass** die beiden Kupplungsbacken (11, 12) jeweils ringförmig um die Zwischenwelle (2) herum verlaufen.

9. Spanngetriebe (1) nach einem der vorhergehenden Ansprüche, **gekennzeichnet durch** eine an die erste Kupplungsbacke (12) gekoppelte Rückstellfeder (14), die auf die erste Kupplungsbacke (12) eine Federkraft in Richtung der zweiten Kupplungsbacke (11) ausübt.

10. Spanngetriebe (1) nach einem der vorhergehenden Ansprüche,
**dadurch gekennzeichnet, dass** der Freilauf (3) einen um die Zwischenwelle (2) herum verlaufenden Freilaufinnenring (13) aufweist und die zweite Kupplungsbacke (11) mit dem Freilaufinnenring (13) verbunden ist.

11. Spanngetriebe (1) nach einem der vorhergehenden Ansprüche,
**dadurch gekennzeichnet, dass** das Zwischenrad (4) über ein Kegelradgetriebe (19) durch den Spannmotor antreibbar ist.

12. Spanngetriebe (1) nach einem der vorhergehenden Ansprüche,
**gekennzeichnet durch** einen Arretierungsmechanismus (28) zum lösbaren Arretieren des Spannrads (9) in einem gespannten Zustand der Speicherfeder.

13. Spanngetriebe (1) nach Anspruch 12,
**dadurch gekennzeichnet, dass** der Arretierungsmechanismus (28) eine fest mit dem Spannrad (9) verbundene Kurvenscheibenrolle (5) und eine Einklinke (6), die die Kurvenscheibenrolle (5) zum Arretieren des Spannrads (9) fixiert, aufweist.

14. Federspeicherantrieb mit einem gemäß einem der vorhergehenden Ansprüche ausgebildeten Spanngetriebe (1).

## Claims

1. Tensioning mechanism (1) for tensioning an accumulator spring of a spring stored energy mechanism, the tensioning mechanism (1) comprising
- a tensioning gear (9) which is coupled to the accumulator spring,
- an intermediate shaft (2) which is coupled to the tensioning gear (9),
- an intermediate gear (4) which can be driven by a tensioning motor,
- a freewheel (3) which is coupled to the intermediate gear (4),
**characterized by**
- a dog clutch (20) which couples the freewheel (3) to the intermediate shaft (2) in order to tension the accumulator spring, decouples it from the intermediate shaft (2) in the tensioned state of the accumulator spring, and has a first clutch block (12) which is coupled fixedly to the intermediate shaft (2) so as to rotate with it and a second clutch block (11) which is connected to the freewheel (3),
- the first clutch block (12) being able to be displaced between two end positions along a rotational axis (21) of the intermediate shaft (2), and having a plurality of first dogs (34) which face the second clutch block (11) and are arranged around the intermediate shaft (2),
- the second clutch block (11) having a plurality of second dogs (36) which face the first clutch block (12),
- and, in an intermediate position of the first clutch block (12) which lies between the two end positions, each second dog (36) protruding into an intermediate space between two first dogs (34) which are adjacent with respect to it, having a stop face (40) for one of said two first dogs (34) which are adjacent with respect to it, on which stop face (40) a side face (39) of said first dog (34) bears in the case of a rotation of the first clutch block (12) with respect to the second clutch block (11) in a first rotational direction about the rotational axis (21), and forming a ramp for the other of the two first dogs (34) which are adjacent with respect to it, on which ramp said first dog (34) can slide in the case of a rotation of the first clutch block (12) with respect to the second clutch block (11) in a second rotational direction about the rotational axis (21), which second rotational direction is opposed to the first rotational direction,
- a coupling element (23) which is connected to the first clutch block (12), is guided through a transverse opening (22) in the intermediate shaft (2), which transverse opening (22) runs perpendicularly with respect to the rotational axis (21) of the intermediate shaft (2), and can be displaced in the transverse opening (22) parallel to the rotational axis (21) of the intermediate shaft (2) between a first position which defines a first end position of the first clutch block (12) and a second position which defines the second end position of the first clutch block (12).

2. Tensioning mechanism (1) according to Claim 1, **characterized in that** the first dogs (34) are arranged equidistantly with respect to one another and at an identical spacing from the rotational axis (21), and **in that** the second dogs (36) are arranged equidistantly with respect to one another and at the same spacing from the rotational axis (21) as the first dogs (34).

3. Tensioning mechanism (1) according to Claim 1 or 2, **characterized in that** the first clutch block (12) has four first dogs (34), and the second clutch block (11) has four second dogs (36) .

4. Tensioning mechanism (1) according to one of the preceding claims,
**characterized in that** the coupling element (23) is configured as a tube or bolt, the longitudinal axis of which is arranged perpendicularly with respect to the rotational axis (21) of the intermediate shaft (2), and the ends of which protrude into recesses (24) in the first clutch block (12).

5. Tensioning mechanism (1) according to one of the preceding claims,
**characterized by** a switching pin (10) which is mounted displaceably in a longitudinal opening (25) in the intermediate shaft (2), which longitudinal opening (25) runs along the rotational axis (21) of the intermediate shaft (2), and is coupled to the coupling element (23).

6. Tensioning mechanism (1) according to Claim 5,
**characterized in that** a resetting end (26) of the switching pin (10) protrudes out of the longitudinal opening (25), and a resetting element (8) is arranged on the tensioning gear (9), which resetting element (8) displaces the resetting end (26) of the switching pin (10) toward the longitudinal opening (25) in the tensioned state of the accumulator spring, with the result that the coupling element (23) is displaced from its first into its second position.

7. Tensioning mechanism (1) according to Claim 6,
**characterized in that** the resetting element (8) has a contact end which projects radially from the tensioning gear (9) and has a contact face (27) which bears against the resetting end (26) of the switching pin (10) in the case of the displacement of the latter.

8. Tensioning mechanism (1) according to one of the preceding claims,
**characterized in that** the two clutch blocks (11, 12) run in each case in an annular manner around the intermediate shaft (2).

9. Tensioning mechanism (1) according to one of the preceding claims,
**characterized by** a restoring spring (14) which is coupled to the first clutch block (12) and exerts a spring force on the first clutch block (12) in the direction of the second clutch block (11) .

10. Tensioning mechanism (1) according to one of the preceding claims,
**characterized in that** the freewheel (3) has a freewheel inner ring (13) which runs around the intermediate shaft (2), and the second clutch block (11) is connected to the freewheel inner ring (13).

11. Tensioning mechanism (1) according to one of the preceding claims,
**characterized in that** the intermediate gear (4) can be driven via a bevel gear mechanism (19) by way of the tensioning motor.

12. Tensioning mechanism (1) according to one of the preceding claims,
**characterized by** a locking mechanism (28) for releasably locking the tensioning gear (9) in a tensioned state of the accumulator spring.

13. Tensioning mechanism (1) according to Claim 12,
**characterized in that** the locking mechanism (28) has a cam disk roller (5), which is connected fixedly to the tensioning gear (9), and a pawl (6) which fixes the cam disk roller (5) in order to lock the tensioning gear (9).

14. Spring stored energy mechanism with a tensioning mechanism (1) which is configured according to one of the preceding claims.

## Revendications

1. Mécanisme (1) de tension pour tendre un ressort accumulateur d'un entraînement à ressort accumulateur, le mécanisme (1) de tension comprenant
- une roue (9) de tension couplée au ressort accumulateur,
- un arbre (2) intermédiaire couplé à la roue (9) de tension,
- une roue (4) intermédiaire pouvant être entraînée par un moteur de tension et
- une roue libre (3) couplée à la roue (4) intermédiaire, **caractérisé par**
- un accouplement (20) à crabot, qui couple la roue libre (3) pour la tension du ressort accumulateur à l'arbre (2) intermédiaire est, dans l'état tendu du ressort accumulateur, découplé de l'arbre (2) intermédiaire et a une première mâchoire (12) d'accouplement couplée d'une manière fixe en rotation à l'arbre (2) intermédiaire et une deuxième mâchoire (11) d'accouplement reliée à la roue libre (3),
- dans lequel la première mâchoire (12) d'accouplement peut coulisser entre deux positions d'extrémité le long d'un axe (21) de rotation de l'arbre (2) intermédiaire et a plusieurs premiers crabots (34), qui sont tournés vers la première mâchoire (11) de l'accouplement et qui sont disposés tout autour de l'arbre (2) intermédiaire,
- la deuxième mâchoire (11) de l'accouplement a plusieurs deuxièmes crabots (36) tournés vers la première mâchoire (12) de l'accouplement
- et chaque deuxième crabot (36) pénètre, dans une position intermédiaire, se trouvant entre les deux positions d'extrémité, de la première mâchoire (12) de l'accouplement dans un espace intermédiaire, compris entre deux premiers crabots (34) qui en sont voisins a, pour l'un de ces deux premiers crabots (34) qui en sont voisins, une surface (40) de butée sur laquelle vient en butée une surface (39) latérale de ce premier crabot (34), lors d'une rotation de la première mâchoire (12) de l'accouplement par rapport à la deuxième mâchoire (11) de l'accouplement, dans un premier sens de rotation autour de l'axe (21) de rotation, et forme, pour l'autre des deux premiers crabots (34) qui en sont voisins, une rampe sur laquelle ce premier crabot (34) peut, lors d'une rotation de la première mâchoire (12) de l'accouplement par rapport à la deuxième mâchoire (11) de l'accouplement, glisser dans un deuxième sens de rotation, contraire au premier sens de rotation, autour de l'axe (21) de rotation,
- un élément (23) de couplage, qui est relié à la première mâchoire (12) de l'accouplement, qui passe dans une ouverture (22) transversale, s'étendant perpendiculairement à l'axe (21) de rotation de l'arbre (2) intermédiaire, de l'arbre (2) intermédiaire et qui peut, dans l'ouverture (22) transversale, coulisser, parallèlement à l'axe (21) de rotation de l'arbre (2) intermédiaire, entre une première position, définissant une première position d'extrémité de la première mâchoire (12) de l'accouplement, et une deuxième position, définissant la deuxième position d'extrémité de la première mâchoire (12) de l'accouplement.

2. Mécanisme (1) de tension suivant la revendication 1, **caractérisé en ce que** les premiers crabots (34) sont équidistants les uns des autres et disposés à la même distance de l'axe (21) de rotation, et **en ce que** les deuxièmes crabots (36) sont équidistants les uns des autres et sont disposés à la même distance de l'axe (21) de rotation que les premiers crabots (34).

3. Mécanisme (1) de tension suivant la revendication 1 ou 2, **caractérisé en ce que** la première mâchoire (12) de l'accouplement a quatre premiers crabots (34) et la deuxième mâchoire (11) de l'accouplement a quatre deuxièmes crabots (36).

4. Mécanisme (1) de tension suivant l'une des revendications précédentes,
**caractérisé en ce que** l'élément (23) de couplage est constitué sous la forme d'un tube ou d'un axe, dont l'axe longitudinal est perpendiculaire à l'axe (21) de rotation de l'arbre (2) intermédiaire et dont les extrémités pénètrent dans des évidements (24) de la première mâchoire (12) de l'accouplement.

5. Mécanisme (1) de tension suivant l'une des revendications précédentes,
**caractérisé par** une tige (10) de commande, qui est montée coulissante dans une ouverture (25) longitudinale de l'arbre (2) intermédiaire, s'étendant suivant l'axe (21) de rotation de l'arbre (2) intermédiaire, et qui est couplée à l'élément (23) de couplage.

6. Mécanisme (1) de tension suivant la revendication 5, **caractérisé en ce qu'**une extrémité (26) de commande de la tige (10) de commande est en saillie de l'ouverture (25) longitudinale et sur la roue (9) de tension est monté un élément (8) de commande, qui déplace l'extrémité (26) de commande de la tige (10) de commande, lorsque le ressort accumulateur est à l'état tendu, vers l'ouverture (25) longitudinale, de manière à faire passer l'élément (23) de couplage de sa première à sa deuxième position.

7. Mécanisme (1) de tension suivant la revendication 6, **caractérisé en ce que** l'élément (8) de commande a une extrémité de contact en saillie radialement de la roue (9) de tension et ayant une surface (27) de contact qui, lorsque la tige (10) de commande se déplace, s'applique à son extrémité (26) de commande.

8. Mécanisme (1) de tension suivant l'une des revendications précédentes,
**caractérisé en ce que** les deux mâchoires (11, 12) de l'accouplement s'étendent respectivement annulairement tout autour de l'arbre (2) intermédiaire.

9. Mécanisme (1) de tension suivant l'une des revendications précédentes,
**caractérisé par** un ressort (14) de rappel, qui est couplé à la première mâchoire (12) de l'accouplement et qui applique, sur la première mâchoire (12) de l'accouplement, une force de ressort en direction de la deuxième mâchoire (11) de l'accouplement.

10. Mécanisme (1) de tension suivant l'une des revendications précédentes,
**caractérisé en ce que** la roue libre (3) a un anneau (13) intérieur de roue libre s'étendant tout autour de l'arbre (2) intermédiaire, et la deuxième mâchoire (11) de l'accouplement est reliée à l'anneau (13) intérieur de la roue libre.

11. Mécanisme (1) de tension suivant l'une des revendications précédentes,
**caractérisé en ce que** la roue (4) intermédiaire peut, par un engrenage (19) conique, être entraînée par le moteur de tension.

12. Mécanisme (1) de tension suivant l'une des revendications précédentes,
**caractérisé par** un mécanisme (28) d'arrêt pour l'arrêt amovible de la roue (9) de tension dans un état tendu du ressort accumulateur.

13. Mécanisme (1) de tension suivant la revendication 12, **caractérisé en ce que**
le mécanisme (28) d'arrêt a un galet (5) de disque came relié à la roue (9) de tension et un cliquet (6), qui immobilise le galet (5) du disque came pour l'arrêt de la roue (9) de tension.

14. Entraînement de ressort accumulateur comprenant un mécanisme (1) de tension constitué suivant l'une des revendications précédentes.
